# EUROPÄISCHE PATENTSCHRIFT

(11) **EP 2 049 318 B1**
(45) Veröffentlichungstag und Bekanntmachung des Hinweises auf die Patenterteilung: **21.07.2010**
(21) Anmeldenummer: 07786657.2
(22) Anmeldetag: 10.08.2007
(51) Int. Cl.: B29C 47/12, B29C 49/00

(54) **SPRITZKOPF FÜR EINEN CORRUGATOR ZUR HERSTELLUNG VON KUNSTSTOFFROHREN**
INJECTION HEAD FOR A CORRUGATOR FOR THE PRODUCTION OF PLASTICS PIPES
TÊTE D'INJECTION POUR UNE MACHINE À ONDULER POUR LA FABRICATION DE TUBES EN MATIÈRE PLASTIQUE

(30) Priorität: 11.08.2006 DE 102006037885
(43) Veröffentlichungstag der Anmeldung: 22.04.2009
(73) Patentinhaber: UNICOR GmbH, 97437 Hassfurt (DE)
(72) Erfinder: NEUBAUER, Gerhard, 97486 Königsberg (DE)
(74) Vertreter: Köhler, Walter
(86) Internationale Anmeldenummer: PCT/EP2007/007095
(87) Internationale Veröffentlichungsnummer: WO 2008/017496

(56) Entgegenhaltungen:
- WO-A-02/066229
- NL-A- 7 409 440
- US-A- 3 809 515
- US-A- 5 690 972
- US-A- 5 788 902
- US-A1- 2004 074 554
- US-A1- 2005 106 280

## Beschreibung

Die Erfindung betrifft einen Spritzkopf für einen Korrugator zur Herstellung von Kunststoffrohren, mit einem Grundkopf, der mindestens einen Anschluss für einen Kunststoff-Extruder aufweist, mit einem an dem Grundkopf axial fluchtend angebrachten Düsenkörper, und mit mindestens einem an dem Düsenkörper axial fluchtend angebrachten Mundstück, das einen Ausgabe-Ringschlitz für den entsprechenden Kunststoff aufweist, wobei das mindestens eine Mundstück einen Zentralkörper und einen diesen umgebenden Hülsenkörper aufweist, die den zugehörigen Ausgabe-Ringschlitz bestimmen, wobei der Zentralkörper des mindestens einen Mundstückes eine dem jeweiligen Hülsenkörper zugewandte Mantelfläche mit in Umfangsrichtung gleichmäßig verteilten, gewundenen Kunststoff-Verteilernuten aufweist.

Ein derartiger Spritzkopf für einen Corrugator zur Herstellung von Kunststoff-Rohren ist aus der US 2005/0106280 A1 bekannt. Bei diesem bekannten Spritzkopf ist der Grundkopf einfach von Rohren gebildet, die jeweils mit einer Heizeinrichtung versehen sind. Das eine beheizbare Rohr ist zentral, d. h. in Achslängsrichtung des Spritzkopfes, vorgesehen und das andere Rohr ist außermittig angeordnet und zum zentralen Rohr parallel orientiert.

Spritzköpfe sind bspw. auch aus der US 3,743,456, der EP 0 208 055 A1, der EP 0 230 055 A1 oder der DE 2 911 833 C2 bekannt, sie dienen beispielsweise zur Herstellung von Querrippenrohren aus einem einzigen Kunststoffmaterial oder zur Herstellung von Querrippenrohren aus unterschiedlichen Kunststoffmaterialien. Kunststoff-Rohre der zuletzt genannten Art können beispielsweise eine glatte Innenlage aus einem Kunststoffmaterial und eine mit dieser integral verbundene gewellte Außenlage aus demselben oder einem davon verschiedenen zweiten Kunststoffmaterial aufweisen.

Aus der WO 02/066229 A1 ist eine Vorrichtung zur Herstellung von nahtlosen Kunststoffrohren bekannt, die mindestens eine Extrusionseinrichtung, mindestens einen der Extrusionseinrichtung nachgeschalteten Spritzkopf mit mindestens einem Ringspalt, und mindestens einen dem Spritzkopf nachgeschalteten, vom wandernden Korrugatorbacken gebildeten Formhohlraum aufweist. Der Spritzkopf weist eine innerhalb des Querschnitts des Formhohlraums angeordnete plattenförmige Verteileinrichtung auf, die mehrere von der Eintrittsöffnung sternförmig ausgehende Verteilkanäle besitzt.

Bei bekannten Spritzköpfen zur Herstellung von Kunststoff-Rohren, insbesondere Querrippenrohren, die aus einer glatten Innenlage und einer gewellten Außenlage bestehen, weist der Düsenkörper für die Außenlage ein Außenhülsenelement und ein davon radial beabstandetes Innenhülsenelement und für die Innenlage ein Außenhülsenelement und ein davon radial beabstandetes Innenhülsenelement auf. Der Düsenkörper besteht also aus einer entsprechenden Anzahl Einzelteile, was sich auf die Herstellungskosten bekannter Spritzköpfe auswirkt. Entsprechendes gilt für den Grundkopf der bekannten Spritzköpfe. Ein weiterer Mangel bekannter Spritzköpfe besteht darin, dass das mindestens eine am Düsenkörper vorderseitig angebrachte Mundstück zu seiner genauen Zentrierung Distanzringe benötigt, und dass außerdem zwischen dem Zentralkörper und dem diesen umgebenden Hülsenkörper des Mundstückes Zentrierstifte erforderlich sind, welche die Strömung des geschmolzenen Kunststoffes behindern, so dass eine Streifenbildung in dem aus dem Ausgabe-Ringschlitz austretenden geschmolzenen Kunststoff oftmals nicht vermeidbar ist. Ein ganz wesentlicher Mangel bekannter Spritzköpfe besteht darin, dass eine Änderung des Spritzkopfes zur Herstellung von Kunststoff-Rohren mit einem gewünschten anderen Durchmesser zeitaufwendig ist, d.h. die Wechselzeiten sind relativ lang.

Der Erfindung liegt die Aufgabe zugrunde, einen Spritzkopf der eingangs genannten Art zu schaffen, der vergleichsweise einfach aufgebaut aus relativ wenigen Einzelteilen besteht, so dass seine Herstellungskosten reduziert sind, dass die Wechselzeiten zur Realisierung von Kunststoff-Rohren mit unterschiedlichen Durchmessern vergleichsweise kurz sind, und dass eine unerwünschte Streifenbildung im hergestellten Kunststoff-Rohr zuverlässig vermieden wird.

Diese Aufgabe wird erfindungsgemäß durch den Spritzkopf mit den Merkmalen des Anspruchs 1, d.h. dadurch gelöst, dass der Grundkopf mit in Umfangrichtung gleichmäßig verteilten, axial orientierten ersten Kanälen für den mindestens einen Kunststoff ausgebildet ist, dass der Düsenkörper mit in Umfangsrichtung gleichmäßig verteilten, axial orientierten zweiten Kanälen ausgebildet ist, die mit den ersten Kanälen strömungstechnisch verbunden sind, dass die jeweilige Verteilernut mit einer an der Rückenfläche des Zentralkörpers ausgebildeten Ringnut, in welche die zweiten Kanäle einmünden, mittels Verbindungsabschnitten strömungstechnisch verbunden ist, und dass die ersten Kanäle an einem gemeinsamen Teilkreis voneinander gleichmäßig beabstandet vorgesehen sind und sich, zum jeweiligen Anschluss zugehörig, abwechseln.

Bei dem erfindungsgemäßen Spritzkopf besteht der Grundkopf in vorteilhafter Weise also gleichsam aus einem kompakten Körper mit ersten Kanälen, d.h. die Anzahl seiner Einzelteile ist im Vergleich zum Grundkopf bekannter Spritzköpfe der gattungsgemäßen Art klein. Entsprechendes gilt für den Düsenkörper, auch dieser besteht quasi aus einem kompakten Körper mit zweiten Kanälen, so dass die Herstellungskosten des erfindungsgemäßen Spritzkopfes in vorteilhafter Weise relativ gering sind. Ein weiterer Vorteil des erfindungsgemäßen Spritzkopfes besteht darin, dass durch die in der Mantelfläche des Zentralkörpers des mindestens einen Mundstückes ausgebildeten, in Umfangsrichtung gleichmäßig verteilten gewundenen Kunststoff-Verteilnuten eine sehr gleichmäßige Ausgabe des geschmolzenen Kunststoffes aus dem zugehörigen Ausgabe-Ringschlitz gewährleistet wird, wobei durch die erfindungsgemäße Konstruktion des/jedes Mundstückes eine Streifenbildung im aus dem Ausgabe-Ringschlitz austretenden geschmolzenen Kunststoffes vermieden wird.

Ein ganz erheblicher Vorteil des erfindungsgemäßen Spritzkopfes besteht in der Möglichkeit, sehr zeitsparend einen Werkzeugwechsel durchführen zu können. Dieser Werkzeugwechsel betrifft sowohl den Wechsel des mindestens einen Mundstückes als auch den Wechsel eines Düsenkörpers mit Mundstücken durch einen anderen Düsenkörper mit mindestens einem zugehörigen Mundstück. Erfindungsgemäß bleibt in vorteilhafter Weise - auch ohne die Zentrierstifte bekannter Mundstücke - die Düsenspalteinstellung des Ausgabe-Ringschlitzes des/jedes Mundstückes erhalten. Außerdem ist der Düsenspalt in vorteilhafter Weise einfach stufenlos einstellbar.

Bei dem erfindungsgemäßen Spritzkopf kann der Grundkopf einen Anschluss oder mindestens zwei Anschlüsse für Extruder und eine der Anzahl Extruder entsprechende Anzahl erste Kanäle aufweisen.

Erfindungsgemäß besitzt der Düsenkörper zweckmäßigerweise kleinere Querschnittsabmessungen als der Grundkopf, so daß sich der erfindungsgemäße Spritzkopf in die Formstrecke eines Corrugators passend hineinerstrecken kann, wobei es zweckmäßig ist, wenn zwischen dem Grundkopf und dem Düsenkörper ein Zwischenkörper vorgesehen ist, der mit Übergangskanälen ausgebildet ist, welche die ersten Kanäle des Grundkopfes mit den zweiten Kanälen des Düsenkörpers strömungstechnisch verbinden. Bei einer derartigen Ausbildung ist es bevorzugt, wenn der Zwischenkörper mit dem Grundkopf fest und wenn der Düsenkörper mit dem Grundkopf loslösbar verbunden ist. Diese loslösbare Verbindung des Düsenkörpers mit dem Grundkopf des erfindungsgemäßen Spritzkopfes bildet in vorteilhafter Weise eine erste Trennebene des Spritzkopfes, an welcher ein zeitsparender Werkzeugwechsel möglich ist. Zu diesem Zwecke kann der Düsenkörper an seinem rückseitigen Endabschnitt einen Ringflansch mit Befestigungslöchern aufweisen und kann der Düsenkörper mit dem Ringflansch an der Stirnfläche des Zwischenkörpers loslösbar befestigt sein. Zu diesem Zwecke können durch die Befestigungslöcher des Ringflansches Gewindebolzen eingesteckt und in Gewindelöcher eingeschraubt sein, die in der Stirnfläche des Zwischenkörpers ausgebildet sind.

Erfindungsgemäß sind die für einen Kunststoff vorgesehenen zweiten Kanäle im Düsenkörper vorzugsweise an einem Teilkreis voneinander gleichmäßig beabstandet vorgesehen bzw. die für mindestens zwei unterschiedliche Kunststoffe vorgesehenen zweiten Kanäle im Düsenkörper an Teilkreisen unterschiedlichen Durchmessers vorgesehen und voneinander jeweils gleichmäßig beabstandet.

Wie bereits weiter oben erwähnt worden ist, kann bei dem erfindungsgemäßen Spritzkopf ein zeitsparender Werkzeugwechsel des mindestens einen Mundstückes in Bezug zum Düsenkörper durchgeführt werden, wenn das mindestens eine Mundstück mit dem Düsenkörper loslösbar verbunden ist. Zu diesem Zwecke kann der Düsenkörper an seinem vorderseitigen Endabschnitt einen Ringflansch mit Befestigungslöchern aufweisen und mit diesem Ringflansch an dem mindestens einen Mundstück loslösbar befestigt sein.

Bevorzugt ist es bei dem erfindungsgemäßen Spritzkopf, wenn die in Umfangsrichtung der Mantelfläche des Zentralkörpers des mindestens einen Mundstücks gleichmäßig verteilten, gewundenen Kunststoff-Verteilernuten von der dem Grundkopf zugewandten Rückenfläche des Zentralkörpers in Strömungsrichtung nach vorne eine ablehnende Nuttiefe besitzen und an einem vorderseitigen Mantel-Ringabschnitt reduzierten Durchmessers enden, so daß zwischen diesem vorderseitigen Mantel-Ringabschnitt des Zentralkörpers und den diesen umgebenden Hülsenkörper ein innerer Ringschlitz gebildet ist. An diesen inneren Ringschlitz schließt sich vorderseitig vorzugsweise eine Ringverbreiterung an, die vorderseitig in den Ausgabe-Ringschlitz des entsprechenden Mundstückes ausmündet.

Bevorzugt ist es hierbei, wenn die Ringverbreiterung mit dem Ausgabe-Ringschlitz radial außenseitig durch den Hülsenkörper und radial innenseitig durch einen mit dem Zentralkörper verstellbar verbundenen Endring bestimmt ist. Durch die Verstellbarkeit dieses Endringes ist es einfach und zeitsparend möglich, den Düsenspalt des Ausgabe-Ringschlitzes wunschgemäß zeitsparend stufenlos einzustellen.

Bei einem Wechsel einer Baugruppe - beispielsweise bestehend aus einem Düsenkörper und mindestens einem Mundstück - und den Ersatz derselben durch eine andere Baugruppe, bestehend aus einem Düsenkörper und mindestens einem Mundstück, bleibt die jeweilige Düsenspalt-Einstellung in vorteilhafter Weise erhalten.

Erfindungsgemäß können mindestens zwei Mundstücke miteinander zu einer Mundstückeinheit verbunden sein. Dabei ist es zweckmäßig, wenn die mindestens zwei Mundstücke an einem Zentralrohrelement vorgesehen sind und ihre Zentralkörper miteinander zur Mundstückeinheit fest verbunden sind. Bei einer Ausbildung mit zwei Mundstücken erstrecken sich durch den Zentralkörper des an den Düsenkörper anschließenden Mundstückes dritte Kanalabschnitte axial hindurch, die mit der Ringnut des Zentralkörpers des in Strömungsrichtung vorderseitigen Mundstücks strömungstechnisch verbunden sind.

Um den bzw. die geschmolzenen Kunststoffmaterialien im erfindungsgemäßen Spritzkopf auf einer passenden Temperatur zu halten, ist es bevorzugt, wenn der Grundkopf und/oder der Düsenkörper und/oder das mindestens eine Mundstück außenseitig jeweils mit einer Heizeinrichtung versehen sind. Entsprechendes gilt für den Zwischenkörper zwischen dem Grundkopf und dem Düsenkörper. Die jeweilige Heizeinrichtung kann in an sich bekannter Weise von Heizbändern gebildet sein.

Weitere Einzelheiten, Merkmale und Vorteile ergeben sich aus der nachfolgenden Beschreibung eines in der Zeichnung dargestellten Ausführungsbeispieles des erfindungsgemäßen Spritzkopfes für einen Corrugator zur Herstellung von zweilagigen Kunststoff-Rohren.

Es zeigen:
- Figur 1: eine perspektivische Ansicht des Spritzkopfes,
- Figur 2: abgeschnitten eine Längsschnittdarstellung des Spritzkopfes gemäß Figur 1, und
- Figur 3: in einer Längsschnittdarstellung zwei miteinander zu einem Mundstückeinheit verbundene Mundstücke an dem abschnittsweise gezeichneten Düsenkörper des Spritzkopfes gemäß den Figuren 1 und 2.

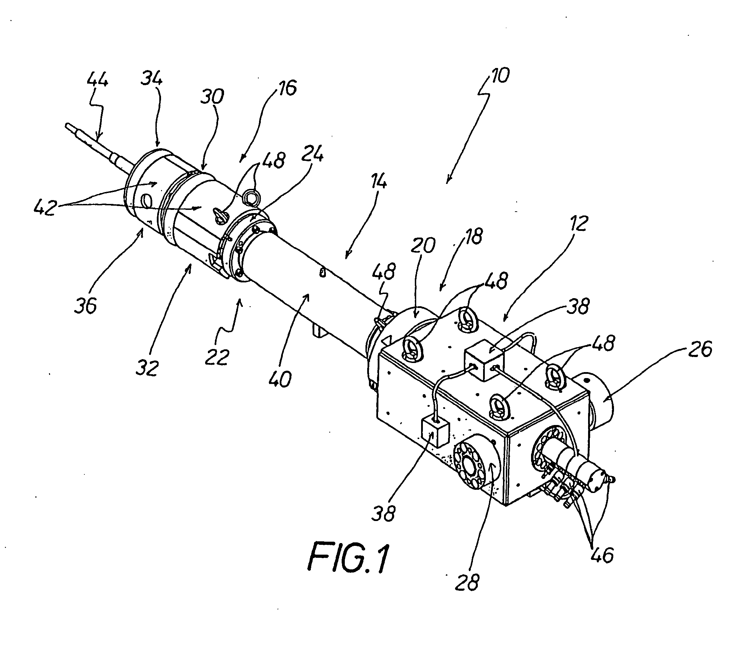

Figur 1 zeigt in einer perspektivischen Ansicht eine Ausbildung des Spritzkopfes 10 für einen Corrugator zur Herstellung von Kunststoffrohren, die beispielsweise eine glatte Innenlage aus einem ersten Kunststoffmaterial und eine mit dieser integral verbundene, quer gewellte Außenlage aus einem zweiten Kunststoffmaterial besitzen. Der Spritzkopf 10 weist einen Grundkopf 12, einen an dem Grundkopf 12 axial fluchtend angebrachten Düsenkörper 14 sowie eine Mundstückeinheit 16 auf, die an dem Düsenkörper 12 axial fluchtend angebracht ist. Zu diesem Zwecke weist der Düsenkörper 14 an seinem rückseitigen Endabschnitt 18 einen Ringflansch 20 und an seinem vorderseitigen Endabschnitt 22 einen Ringflansch 24 auf.

Der Grundkopf 12 des Spritzkopfes 10 weist einen ersten Anschluß 26 für einen ersten Extruder und einen zweiten Anschluß 28 für einen zweiten Extruder auf, mittels welchen der jeweilige geschmolzene Kunststoff in den Grundkopf 12 eingebracht und durch den jeweils zugehörigen Ausgabe-Ringschlitz 30 eines ersten Mundstückes 32 der Mundstückeinheit 16 bzw. durch einen Ausgabe-Ringschlitz 34 eines zweiten Mundstückes 36 der Mundstückeinheit 16 in einen Formhohlraum einer Formstrecke eines Corrugators austreten.

Um die Kunststoffe im Spritzkopf 10 zwischen seinem Grundkopf 12, dem Düsenkörper 14 und der Mundstückeinheit 16 in einem geschmolzenen Zustand zu halten, sind der Grundkopf 12, der Düsenkörper 14 und die Mundstücke 32 und 36 der Mundstückeinheit 16 jeweils mit einer Heizeinrichtung 38, 40 bzw. 42 versehen.

Durch den Spritzkopf 12 erstreckt sich ein Zentralelement 44 hindurch, das in an sich bekannter Weise zum Durchleiten beispielsweise von Kühlwasser, Druckluft oder dergleichen vorgesehen ist. Zu diesem Zwecke ist das Zentralelement 44 rückseitig mit Anschlüssen 46 kombiniert, die aus dem Grundkopf 12 rückseitig herausragen.

Mit der Bezugsziffer 48 sind Kranösen bezeichnet, mittels welchen es möglich ist, den Spritzkopf 10 mit Hilfe eines Lastenkranes oder einer anderen Hebeeinrichtung zu transportieren bzw. zu manipulieren.

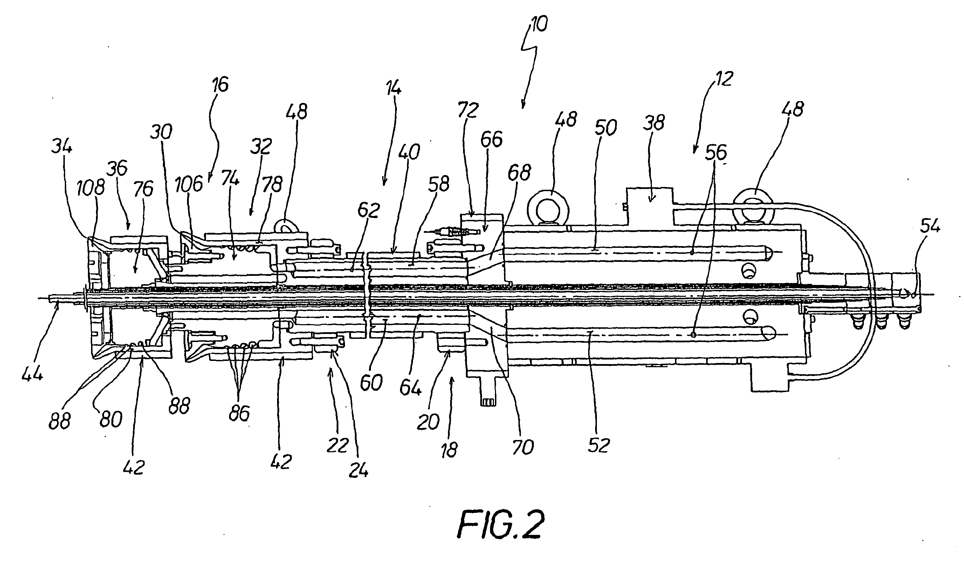

Figur 2 verdeutlicht abschnittsweise längsgeschnitten den Spritzkopf 10 gemäß Figur 1, wobei gleiche Einzelheiten in Figur 2 mit denselben Bezugsziffern wie in Figur 1 bezeichnet sind, so daß es sich erübrigt, in Verbindung mit Figur 2 alle diese Einzelheiten noch einmal detailliert zu beschreiben. Die Figur 2 verdeutlicht, daß der Grundkopf 12 erste Kanäle 50 für das erste geschmolzene Kunststoffmaterial und erste Kanäle 52 für das geschmolzene zweite Kunststoffmaterial aufweist, von welchen in Figur 2 jeweils nur ein erster Kanal 50, 52 dargestellt ist. Die ersten Kanäle 50 sind in Umfangrichtung des Grundkopfes 12 gleichmäßig verteilt vorgesehen und strömungstechnisch mit dem ersten Anschluß 26 (siehe Figur 1) verbunden. Die ersten Kanäle 52 sind in Umfangsrichtung des Grundkopfes 12 ebenfalls gleichmäßig verteilt vorgesehen und strömungstechnisch mit dem zweiten Anschluß 28 (siehe Figur 1) verbunden. Die ersten Kanäle 50 und 52 sind an einem zur zentralen Längsachse 54 des Spritzkopfes 10 konzentrischen gemeinsamen Teilkreis 56 gleichmäßig beabstandet vorgesehen und wechseln sich entlang des Teilkreises 56 ab. D.h. in Umfangsrichtung des Teilkreises 56 schließen jeweils ein erster Kanal 50 und 52 abwechselnd aneinander an. Beispielsweise besitzt der Grundkopf 12 drei erste Kanäle 50 und drei erste Kanäle 52, die am gemeinsamen Teilkreis 56 die Ecken eines regelmäßigen Sechseckes bestimmen.

Der in Figur 2 mittig durchgeschnitten gezeichnete Düsenkörper 14 ist mit zweiten Kanälen 58 ausgebildet, die mit den ersten Kanälen 50 strömungstechnisch verbunden sind. Der Düsenkörper 14 ist außerdem mit zweiten Kanälen 60 ausgebildet, die mit den ersten Kanälen 52 strömungstechnisch verbunden sind. Die zweiten Kanäle 58 sind an einem zur zentralen Achse 54 konzentrisch Teilkreis 62 gleichmäßig verteilt angeordnet und die zweiten Kanäle 60 sind an einem Teilkreis 64 gleichmäßig verteilt angeordnet, dessen Durchmesser kleiner ist als der Durchmesser des Teilkreises 62.

Der Düsenkörper 14 besitzt kleinere Querschnittsabmessungen als der Grundkörper 12, und zwischen dem Grundkörper 12 und dem Düsenkörper 14 ist ein Zwischenkörper 66 vorgesehen, der mit Übergangskanälen 68 und 70 ausgebildet ist, wobei die Übergangskanäle 68 die ersten Kanäle 50 des Grundkopfes 12 mit den zweiten Kanälen 58 des Düsenkörpers 14 strömungstechnisch verbinden und die Übergangskanäle 70 die ersten Kanäle 52 des Grundkopfes 12 mit den zweiten Kanälen 60 des Düsenkörpers 14 strömungstechnisch verbinden.

Der Zwischenkörper 66 ist - wie der Grundkopf 12, der Düsenkörper 14 und die Mundstücke 32 und 36 der Mundstückeinheit 16 - mit einer Heizeinrichtung 72 versehen.

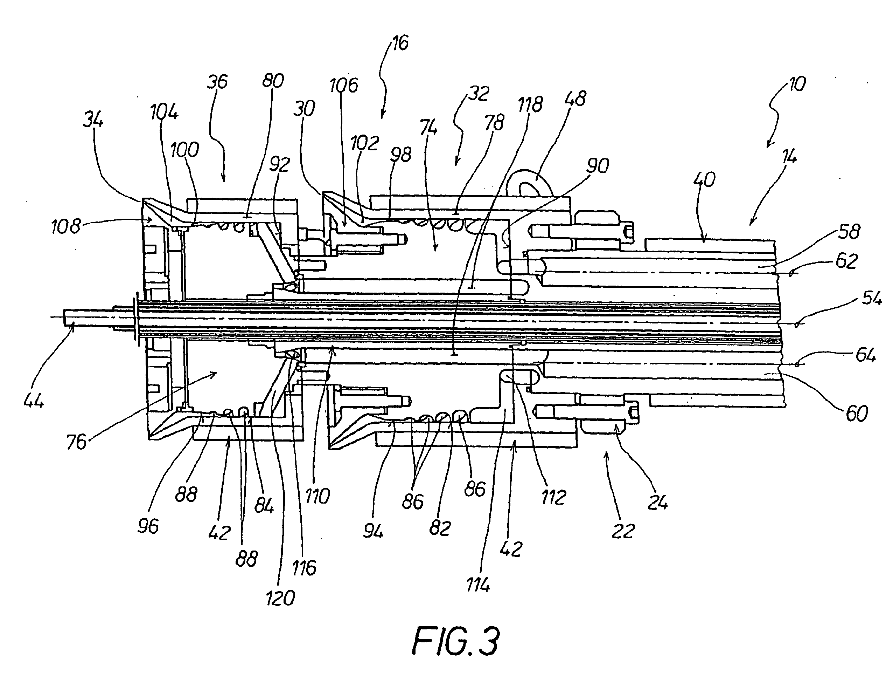

Die Figur 2 und insbesondere die Figur 3 verdeutlicht, daß das jeweilige Mundstück 32, 34 einen Zentralkörper 74, 76 und einen den jeweiligen Zentralkörper umgebenden Hülsenkörper 78, 80 aufweist. Der jeweilige Zentralkörper 74, 76 weist eine dem zugehörigen Hülsenkörper 78, 80 zugewandte Mantelfläche 82, 84 auf. Die jeweilige Mantelfläche 82, 84 ist mit Kunststoff-Verteilernuten 86, 88 ausgebildet, die in Umfangsrichtung des entsprechenden Zentralkörpers 84, 86 gleichmäßig verteilt und mit einer geringen Steigung gewunden ausgebildet sind. Die jeweiligen in Umfangrichtung der Mantelfläche 82, 84 des Zentralkörpers 74, 76 des Mundstückes 32, 34 gleichmäßig verteilten, gewundenen Kunststoff-Verteilernuten besitzen von der Rückenfläche 90, 92 des Zentralkörpers 74, 76 nach vorne zum Ausgabe-Ringschlitz 30, 34 des ersten und zweiten Mundstückes 32, 36 hin eine abnehmende Nuttiefe und enden jeweils an einem vorderseitigen Mantel-Ringabschnitt 94, 96 des entsprechenden Zentralkörpers 74, 76. Hierdurch wird zwischen dem jeweiligen vorderseitigen Mantel-Ringabschnitt 94, 96 und dem diesen umgebenden Hülsenkörper 78, 80 ein innerer Ringschlitz 98, 100 bestimmt, an den vorderseitig jeweils eine Ringverbreiterung 102, 104 anschließt. Die jeweilige Ringverbreiterung 102, 104 mündet vorderseitig in den entsprechenden Ausgabe-Ringschlitz 30, 34 aus.

Die jeweilige Ringverbreiterung 102, 104 mit dem zugehörigen Ausgabe-Ringschlitz 30, 34 ist radial außenseitig durch den zugehörigen Hülsenkörper 78, 80 und radial innenseitig durch einen Endring 106, 108 des jeweiligen Mundstückes 32, 26 bestimmt. Der jeweilige Endring 106, 108 ist mit dem zugehörigen Zentralkörper 74, 76 axial verstellbar verbunden, so daß es einfach und zeitsparend möglich ist, die Schlitzbreite des entsprechenden Ausgabe-Ringschlitzes 30, 34 wunschgemäß einzustellen.

Die beiden Mundstücke 32 und 36 der Mundstückeinheit 16 sind an einem Zentralrohrelement 110 vorgesehen, durch das sich das Zentralelement 44 hindurch erstreckt.

Der Zentralkörper 74 des Mundstückes 32 ist an seiner Rückenfläche 90 mit einer zur zentralen Achse 54 konzentrischen Ringnut 112 ausgebildet, in welche die zweiten Kanäle 58 des Düsenkörpers 14 einmünden. Die Ringnut 112 ist mit den Verteilernuten 86 des Zentralkörpers 74 mittels abgewinkelten Verbindungsabschnitten 114 strömungstechnisch verbunden, die in Umfangsrichtung des Zentralkörpers 74 gleichmäßig beabstandet vorgesehen sind. Mit Hilfe von Stegen zwischen den Verbindungsabschnitten 114 ist der Zentralkörper 74 mit dem Hülsenkörper 78 des Mundstückes 32 fest verbunden. Diese Verbindung erfolgt beispielsweise mit Hilfe von nicht dargestellten Gewindebolzen.

Der Zentralkörper 76 des zweiten Mundstückes 36 ist ebenfalls mit einer um die zentrale Achse 54 konzentrisch umlaufenden Ringnut 116 ausgebildet, in die der zweite Kanal 60 des Düsenkörpers 14 mittels dritter Kanalabschnitte 118 strömungstechnisch verbunden ist, die sich axial durch den Zentralkörper 74 des ersten Mundstückes 32 erstrecken.

Die Ringnut 116 des Zentralkörpers 76 ist mit den Verteilernuten 88 an der Mantelfläche 84 des Zentralkörpers 76 durch Verbindungsabschnitte 120 strömungstechnisch verbunden, die in Umfangsrichtung des Zentralkörpers 76 gleichmäßig verteilt vorgesehen sind.

Gleiche Einzelheiten sind auch in Figur 3 mit denselben Bezugsziffern wie in den Figuren 1 und 2 bezeichnet, so daß es sich erübrigt, in Verbindung mit Figur 3 alle Einzelheiten jeweils detailliert zu beschreiben.

## Patentansprüche

1. Spritzkopf für einen Corrugator zur Herstellung von Kunststoff-Rohren, mit einem Grundkopf (12), der mindestens einen Anschluss (26, 28) für einen Kunststoff-Extruder aufweist, mit einem an dem Grundkopf (12) axial fluchtend angebrachten Düsenkörper (14) und mit mindestens einem an dem Düsenkörper (14) axial fluchtend angebrachten Mundstück (32, 36), das einen Ausgabe-Ringschlitz (30, 34) für den entsprechenden Kunststoff aufweist, wobei das mindestens eine Mundstück (32, 36) einen Zentralkörper (74, 76) und einen diesen umgebenden Hülsenkörper (78, 80) aufweist, die den zugehörigen Ausgabe-Ringschlitz (30, 34) bestimmen, wobei der Zentralkörper (74, 76) des mindestens einen Mundstückes (32, 36) eine dem jeweiligen Hülsenkörper (78, 80) zugewandte Mantelfläche (82, 84) mit in Umfangsrichtung gleichmäßig verteilten, gewundenen Kunststoff-Verteilernuten (86, 88) aufweist,
**dadurch gekennzeichnet,**
**dass** der Grundkopf (12) mit in Umfangrichtung gleichmäßig verteilten, axial orientierten ersten Kanälen (50, 52) für den mindestens einen Kunststoff ausgebildet ist, dass der Düsenkörper (14) mit in Umfangsrichtung gleichmäßig verteilten, axial orientierten zweiten Kanälen (58, 60) ausgebildet ist, die mit den ersten Kanälen (50, 52) strömungstechnisch verbunden sind, dass die jeweilige Verteilernut (86, 88) mit einer an der Rückenfläche (90, 92) des Zentralkörpers (74, 76) ausgebildeten Ringnut (112, 116), in welche die zweiten Kanäle (58, 60) einmünden, mittels Verbindungsabschnitten (114, 120) strömungstechnisch verbunden ist, und dass die ersten Kanäle (50, 52) an einem gemeinsamen Teilkreis (56) voneinander gleichmäßig beabstandet vorgesehen sind und sich, zum jeweiligen Anschluss (26, 28) zugehörig, abwechseln.

2. Spritzkopf nach Anspruch 1,
**dadurch gekennzeichnet,**
**dass** der Grundkopf (12) mindestens zwei Anschlüsse (26, 28) für Extruder und eine der Anzahl Anschlüsse (26, 28) entsprechende Anzahl erste Kanäle (50, 52) aufweist.

3. Spritzkopf nach Anspruch 1,
**dadurch gekennzeichnet,**
**dass** der Düsenkörper (14) kleinere Querschnittsabmessungen besitzt als der Grundkopf (12), und dass zwischen dem Grundkopf (12) und dem Düsenkörper (14) ein Zwischenkörper (66) vorgesehen ist, der mit Übergangskanälen (68, 70) ausgebildet ist, welche die ersten und die zweiten Kanäle (50, 53) und (58,60) miteinander strömungstechnisch verbinden.

4. Spritzkopf nach Anspruch 3,
**dadurch gekennzeichnet,**
**dass** der Zwischenkörper (66) mit dem Grundkopf (12) fest verbunden ist.

5. Spritzkopf nach Anspruch 4,
**dadurch gekennzeichnet,**
**dass** der Düsenkörper (14) mit dem Zwischenkörper (66) loslösbar verbunden ist.

6. Spritzkopf nach Anspruch 5,
**dadurch gekennzeichnet,**
**dass** der Düsenkörper (14) an seinem rückseitigen Endabschnitt (18) einen Ringflansch (20) mit Befestigungslöchern aufweist und mit dem Ringflansch (20) an der Stirnfläche des Zwischenkörpers (66) loslösbar befestigt ist.

7. Spritzkopf nach einem der Ansprüche 3 bis 6,
**dadurch gekennzeichnet,**
**dass** die für einen Kunststoff vorgesehenen zweiten Kanäle (58, 60) im Düsenkörper (14) an einem Teilkreis (62 oder 64) voneinander gleichmäßig beabstandet vorgesehen sind.

8. Spritzkopf nach einem der Ansprüche 3 bis 6,
**dadurch gekennzeichnet,**
**dass** die für mindestens zwei unterschiedliche Kunststoffe vorgesehenen zweiten Kanäle (58, 60) im Düsenkörper (14) an Teilkreisen (62, 64) unterschiedlichen Durchmessers und voneinander jeweils gleichmäßig beabstandet vorgesehen sind.

9. Spritzkopf nach einem der Ansprüche 1 bis 8,
**dadurch gekennzeichnet,**
**dass** das mindestens eine Mundstück (32, 36) mit dem Düsenkörper (14) loslösbar verbunden ist.

10. Spritzkopf nach Anspruch 9,
**dadurch gekennzeichnet,**
**dass** der Düsenkörper (14) an seinem vorderseitigen Endabschnitt (22) einen Ringflansch (24) mit Befestigungslöchern aufweist und das mindestens ein Mundstück (32) bzw. (36) an dem Ringflansch (24) loslösbar befestigt ist.

11. Spritzkopf nach Anspruch 1,
**dadürch gekennzeichnet,**
dass die in Umfangsrichtung der Mantelfläche (82, 84) des Zentralkörpers (74, 76) des mindestens einen Mundstückes (32, 36) gleichmäßig verteilten, gewundenen Kunststoff-Verteilernuten (86, 88) von der Rückenfläche (90, 92) des Zentralkörpers (74, 76) nach vorne zum Aufgabe-Ringschlitz (30, 34) hin eine abnehmende Nuttiefe besitzen und an einem vorderseitigen Mantel-Ringabschnitt (94, 96) reduzierten Durchmessers enden, so dass zwischen diesem vorderseitigem Mantel- Ringabschnitt (94, 96) und dem diesen umgebenden Hülsenkörper (78, 80) ein innerer Ringschlitz (98, 100) ausgebildet ist.

12. Spritzkopf nach Anspruch 11,
**dadurch gekennzeichnet,**
**dass** sich an den inneren Ringschlitz (98, 100) vorderseitig eine Ringverbreiterung (102, 104) anschließt, die vorderseitig in den Ausgabe-Ringschlitz (30, 34) ausmündet.

13. Spritzkopf nach Anspruch 12,
**dadurch gekennzeichnet,**
**dass** die Ringverbreiterung (102, 104) mit dem Ausgabe-Ringschlitz (30, 34) radial außenseitig durch den Hülsenkörper (78, 80) und radial innenseitig durch einen mit dem Zentralkörper (74, 76) verstellbar verbundenen Endring (106, 108) bestimmt ist.

14. Spritzkopf nach einem der Ansprüche 1 bis 13,
**dadurch gekennzeichnet,**
**dass** mindestens zwei Mundstücke (32, 36) miteinander zu einer Mundstückeinheit (16) verbunden sind.

15. Spritzkopf nach Anspruch 14,
**dadurch gekennzeichnet,**
**dass** die mindestens zwei Mundstücke (32, 36) an einem Zentratrohrelement (110) vorgesehen sind und ihre Zentralkörper (74, 76) miteinander zur Mundstückeinheit (16) verbunden sind.

16. Spritzkopf nach Anspruch 14 oder 15,
**dadurch gekennzeichnet,**
**dass** sich durch den Zentralkörper (74) des an den Düsenkörper (14) anschließenden Mundstückes (32) axial dritte Kanalabschnitte (118) hindurcherstrecken, die mit der Ringnut (116) des Zentralkörpers (76) des vorderseitig anschließenden Mundstückes (36) strömungstechnisch verbunden sind.

17. Spritzkopf nach einem der vorhergehenden Ansprüche,
**dadurch gekennzeichnet,**
**dass** der Grundkopf (12) und/oder der Düsenkörper (14) und/oder das mindestens eine Mundstück (32, 36) außenseitig jeweils mit einer Heizeinrichtung (38, 40, 42) versehen sind.

## Claims

1. Injection head for a corrugator for the production of plastics pipes, with a main head (12) having at least one connection (26, 28) for a plastics extruder, with a nozzle body (14) which is attached to the main head (12) so as to be in axial alignment and with at least one mouthpiece (32, 36) which is attached to the nozzle body (14) so as to be in axial alignment and has an output annular slot (30, 34) for the corresponding plastics material, the at least one mouthpiece (32, 36) having a central body (74, 76) and a sleeve body (78, 80) surrounding said central body which determine the associated output annular slot (30, 34), the central body (74, 76) of the at least one mouthpiece (32, 36) having a lateral surface (82, 84) facing the respective sleeve body (78, 80) with wound plastics distributor grooves (86, 88) distributed uniformly in the circumferential direction, **characterized in that** the main head (12) is embodied with axially oriented first channels (50, 52) which are distributed uniformly in the circumferential direction for the at least one plastics material, **in that** the nozzle body (14) is embodied with axially oriented second channels (58, 60) which are distributed uniformly in the circumferential direction and are flow-connected to the first channels (50, 52), **in that** the respective distributor groove (86, 88) is flow-connected by means of connecting portions (114, 120) to an annular groove (112, 116) which is formed on the reverse surface (90, 92) of the central body (74, 76) and into which the second channels (58, 60) discharge, and **in that** the first channels (50, 52) are provided set uniformly apart from one another on a common pitch circle (56) and alternate in association with the respective connection (26, 28).

2. Injection head according to Claim 1, **characterized in that** the main head (12) has at least two connections (26, 28) for extruders and a number of first channels (50, 52) corresponding to the number of connections (26, 28).

3. Injection head according to Claim 1, **characterized in that** the nozzle body (14) has smaller cross-sectional dimensions than the main head (12), and **in that** there is provided between the main head (12) and the nozzle body (14) an intermediate body (66) which is embodied with transfer channels (68, 70) which flow-connect the first and the second channels (50, 53) and (58, 60) to one another.

4. Injection head according to Claim 3, **characterized in that** the intermediate body (66) is securely connected to the main head (12).

5. Injection head according to Claim 4, **characterized in that** the nozzle body (14) is releasably connected to the intermediate body (66).

6. Injection head according to Claim 5, **characterized in that** the nozzle body (14) has on its back end portion (18) an annular flange (20) having fastening holes and is releasably fastened to the annular flange (20) on the end face of the intermediate body (66).

7. Injection head according to one of Claims 3 to 6, **characterized in that** the second channels (58, 60), which are provided for a plastics material, in the nozzle body (14) are provided set uniformly apart from one another on a pitch circle (62 or 64).

8. Injection head according to one of Claims 3 to 6, **characterized in that** the second channels (58, 60), which are provided for at least two different plastics materials, in the nozzle body (14) are provided on pitch circles (62, 64) of differing diameter and each set uniformly apart from one another.

9. Injection head according to one of Claims 1 to 8, **characterized in that** the at least one mouthpiece (32, 36) is releasably connected to the nozzle body (14).

10. Injection head according to Claim 9, **characterized in that** the nozzle body (14) has on its front end portion (22) an annular flange (24) having fastening holes and the at least one mouthpiece (32) or (36) is releasably fastened to the annular flange (24).

11. Injection head according to Claim 1, **characterized in that** the wound plastics distributor grooves (86, 88), which are distributed uniformly in the circumferential direction of the lateral surface (82, 84) of the central body (74, 76) of the at least one mouthpiece (32, 36), have, from the reverse surface (90, 92) of the central body (74, 76) forward toward the output annular slot (30, 34), a decreasing groove depth and end at a front lateral annular portion (94, 96) of reduced diameter, so that an inner annular slot (98, 100) is formed between this front lateral annular portion (94, 96) and the sleeve body (78, 80) surrounding said front lateral annular portion.

12. Injection head according to Claim 11, **characterized in that** an annular widening (102, 104), which leads at the front into the output annular slot (30, 34), adjoins the inner annular slot (98, 100) at the front.

13. Injection head according to Claim 12, **characterized in that** the annular widening (102, 104) with the output annular slot (30, 34) is determined radially outwardly by the sleeve body (78, 80) and radially inwardly by an end ring (106, 108) which is adjustably connected to the central body (74, 76).

14. Injection head according to one of Claims 1 to 13, **characterized in that** at least two mouthpieces (32, 36) are joined together to form a mouthpiece unit (16).

15. Injection head according to Claim 14, **characterized in that** the at least two mouthpieces (32, 36) are provided on a central pipe element (110) and their central bodies (74, 76) are joined together to form the mouthpiece unit (16).

16. Injection head according to Claim 14 or 15, **characterized in that** third channel portions (118), which are flow-connected to the annular groove (116) in the central body (76) of the front-adjoining mouthpiece (36), extend axially through the central body (74) of the mouthpiece (32) adjoining the nozzle body (14).

17. Injection head according to one of the preceding claims, **characterized in that** the main head (12) and/or the nozzle body (14) and/or the at least one mouthpiece (32, 36) are each provided on the outside with a heating means (38, 40, 42).

## Revendications

1. Tête d'injection pour une machine à onduler destinée à la réalisation de tubes en matière plastique, comportant une tête de base (12), qui est munie d'au moins un raccord (26, 28) pour une extrudeuse, comportant un corps de filière (14) monté en alignement axial sur la tête de base (12), et comportant au moins une sortie de filière (32, 36), qui est montée en alignement axial sur le corps de filière (14) et qui comporte une fente annulaire de distribution (30, 34) pour la matière plastique concernée, au moins une de ladite sortie de filière (32, 36) comportant un corps central (74, 76) et un corps formant gaine (78, 80) entourant ce dernier, ledit corps central (74, 76) d'au moins une de ladite sortie de filière (32, 36) comportant une paroi latérale (82, 84), orientée vers le corps formant gaine (78, 80) respectif et munie de rainures de distribution de la matière plastique (86, 88) en spirale, uniformément réparties dans la direction circonférentielle,
**caractérisée en ce que**
la tête de base (12) est réalisée avec des premiers conduits (50, 52) pour au moins ladite matière plastique, orientés axialement et uniformément répartis dans la direction circonférentielle, **en ce que** le corps de filière (14) est réalisé avec des deuxièmes conduits (58, 60) orientés axialement, qui sont uniformément répartis dans la direction circonférentielle et qui communiquent, dans le sens d'une liaison fluidique, avec les premiers conduits (50, 52), **en ce que** la rainure de distribution (86, 88) respective communique, dans le sens d'une liaison fluidique, par l'intermédiaire de tronçons de jonction (114, 120), avec une rainure annulaire (112, 116), qui est réalisée sur le côté arrière (90, 92) du corps central (74, 76) et dans laquelle débouchent les deuxièmes conduits (58, 60), et **en ce que** les premiers conduits (50, 52) sont prévus à distance régulière les uns des autres sur un cercle partiel (56) commun et alternent pour être associés au raccord (26, 28) respectif.

2. Tête d'injection selon la revendication 1, **caractérisée en ce que** la tête de base (12) comporte au moins deux raccords (26, 28) pour extrudeuse et un nombre de premiers conduits (50, 52) correspondant au nombre de raccords (26, 28).

3. Tête d'injection selon la revendication 1, **caractérisée en ce que** le corps de filière (14) a des dimensions de section inférieures à celles de la tête de base (12), et **en ce que**, entre la tête de base (12) et le corps de filière (14), il est prévu un corps intermédiaire (66) qui est réalisé avec des conduits de transition (68, 70), par lesquels les premiers et les deuxièmes conduits (50, 52) et (58, 60) communiquent entre eux dans le sens d'une liaison fluidique.

4. Tête d'injection selon la revendication 3, **caractérisée en ce que** le corps intermédiaire (66) est assemblé de manière fixe à la tête de base (12).

5. Tête d'injection selon la revendication 4, **caractérisée en ce que** le corps de filière (14) est assemblé de manière amovible avec le corps intermédiaire (66).

6. Tête d'injection selon la revendication 5, **caractérisée en ce que** le corps de filière (14), au niveau de sa zone d'extrémité arrière (18), comporte un collet annulaire (20) avec des trous de fixation, et est fixé de manière amovible au collet annulaire (20) au niveau de la face frontale du corps intermédiaire (66).

7. Tête d'injection selon l'une quelconque des revendications 3 à 6, **caractérisée en ce que** les deuxièmes conduits (58, 60), prévus pour une matière plastique, sont prévus dans le corps de filière (14) à distance régulière les uns des autres sur un cercle partiel (62 ou 64).

8. Tête d'injection selon l'une quelconque des revendications 3 à 6, **caractérisée en ce que** les deuxièmes conduits (58, 60), prévus pour au moins deux matières plastiques différentes, sont prévus dans le corps de filière (14) sur des cercles partiels (62, 64) de diamètre différent et à distance régulière l'un de l'autre.

9. Tête d'injection selon l'une quelconque des revendications 1 à 8, **caractérisée en ce qu'**au moins une sortie de filière (32, 36) est assemblée de manière amovible avec le corps de filière (14).

10. Tête d'injection selon la revendication 9, **caractérisée en ce que** le corps de filière (14), au niveau de sa zone d'extrémité avant (22), comporte un collet annulaire (24) avec des trous de fixation, et au moins une de ladite sortie de filière (32) ou (36) est fixée de manière amovible au collet annulaire (24).

11. Tête d'injection selon la revendication 1, **caractérisée en ce que** les rainures de distribution de la matière plastique (86, 88) en spirale, uniformément réparties dans la direction circonférentielle de la paroi latérale (82, 84) du corps central (74, 76) d'au moins une de ladite sortie de filière (32, 36), ont une profondeur qui diminue depuis la face arrière (90, 92) du corps central (74, 76) vers l'avant vers la fente annulaire de distribution (30, 34) et se terminent au niveau d'une partie d'enveloppe annulaire (94, 96), du côté avant, de diamètre plus petit, de telle sorte qu'il se forme une fente annulaire intérieure (98, 100) entre ladite partie d'enveloppe annulaire (94, 96), du côté avant, et le corps formant gaine (78, 80) entourant celle-ci.

12. Tête d'injection selon la revendication 11, **caractérisée en ce que** la fente annulaire intérieure (98, 100) se prolonge à l'avant par un élargissement annulaire (102, 104) qui débouche sur le côté avant dans la fente annulaire de distribution (30, 34).

13. Tête d'injection selon la revendication 12, **caractérisée en ce que** l'élargissement annulaire (102, 104) avec la fente annulaire de distribution (30, 34) est déterminée radialement du côté extérieur par le corps formant gaine (78, 80) et radialement du côté intérieur par une bague d'extrémité (106, 108) reliée de manière réglable au corps central (74, 76).

14. Tête d'injection selon l'une quelconque des revendications 1 à 13, **caractérisée en ce qu'**au moins deux sorties de filière (32, 36) sont reliées l'une à l'autre pour former une unité de filière (16).

15. Tête d'injection selon la revendication 14, **caractérisée en ce que** au moins deux desdites sorties de filière (32, 36) sont prévues sur un élément tubulaire central (110) et leurs corps centraux (74, 76) sont reliés l'un à l'autre pour former une unité de filière (16).

16. Tête d'injection selon la revendication 14 ou 15, **caractérisée en ce qu'**à travers le corps central (74) de la sortie de filière (32), adjacente au corps de filière (14), passent dans la direction axiale des troisièmes tronçons de conduit (118) qui, pour former une liaison fluidique, communiquent avec la rainure annulaire (116) du corps central (76) de la sortie de filière (36) adjacente du côté avant.

17. Tête d'injection selon l'une quelconque des revendications précédentes, **caractérisée en ce que** la tête de base (12) et/ou le corps de filière (14) et/ou au moins une de ladite sortie de filière (32, 36) sont munis respectivement du côté extérieur d'un dispositif de chauffage (38, 40, 42).
